# EUROPEAN PATENT SPECIFICATION

(11) **EP 2 540 156 B1**
(45) Date of publication and mention of the grant of the patent: **04.03.2015**
(21) Application number: 12174191.2
(22) Date of filing: 28.06.2012
(51) Int. Cl.: A01G 31/04

(54) **Method and device for cultivating a crop**
Verfahren und Vorrichtung zur Kultivierung einer Pflanze
Procédé et dispositif de culture d'une plante

(30) Priority: 28.06.2011 NL 2007007
(43) Date of publication of application: 02.01.2013
(73) Proprietor: GEGE Machinebouw B.V., 5464 RA Veghel (NL)
(72) Inventor: Van Asseldonk, Johannes Maria, 5400 AG Uden (NL)
(74) Representative: Hylarides, Paul Jacques

(56) References cited:
- WO-A1-2009/067194
- GB-A- 2 162 033
- JP-A- 2004 329 130
- US-A- 5 097 627

## Description

The invention relates to a method for cultivating a crop, comprising of arranging substrates in respective openings of a carrier, wherein the substrates are adapted to receive a crop or precursor thereof and to then further cultivate the plant therein. The invention also relates to a device for cultivating a crop, the device comprising a carrier to be disposed on a ground surface and provided with openings suitable for arranging substrates therein for the purpose of receiving a crop or a precursor thereof, and a water container for containing a water mass therein. Finally, the invention relates to an assembly of a building, such as a shed, glasshouse or greenhouse, and one or more of such devices for cultivating a crop.

Cultivating crops on water, more particularly in ponds, is per se known. Known for instance is a system which provides a number of floating plates. Arranged in each of the plates are a large number of tubular receiving spaces in which crop holders with a crop or a precursor thereof can be placed. The plates with the crop holders placed therein are allowed to float on the water surface of the pond, this such that the tubular receiving spaces extend up to or into the water. The crop then grows while situated in the tubular receiving spaces. The microclimate inside the tubular receiving space should allow the crop to thrive.

The known system does however have a number of drawbacks. Firstly, the ponds are in the open air. This means that the crop in the crop holders is exposed to weather influences. Because the crop is dependent on weather influences and the seasons, and can further be adversely affected by insects and outside diseases, the yield and quality of the crop cannot generally be termed optimal.

A further drawback is that the crop in the crop holder of the plate floating on the water always lies at a fixed distance relative to the water surface. Depending on a number of factors, including the type of crop, the stage of development thereof and the lengths of the roots, a different distance may be desired between the crop holder and the water surface in order to enable a large and high-quality yield.

For the purpose of harvesting the crop it is also necessary to remove the plates from the pond and to take the crop holders one by one out of the receiving spaces and remove the crop from the crop holders. Harvesting is hereby not very efficient and requires a relatively large amount of time and labour. The capacity of the system is moreover limited since only a single layer of plates can be arranged per pond, and the number of crop units to be cultivated per plate is limited in practice.

The US document US 5,097,627 A describes a machine which is disposed in an enclosed area such as a greenhouse and with which plants can be grown. The machine comprises a large reservoir with upright edges in which a number of grow lines are arranged. A number of plant holders can be displaced along these grow lines using a variable pitch screw. The plant holders comprise a substrate with a plant, wherein the roots extend downward. During cultivation the plants can be transported along the grow lines using the pitch screw.

A drawback of the known machine is that it is fairly complex and voluminous and that the plants, after cultivation, have to be separately harvested. The plants are removed here from the pitch screw and further processed in a separate machine.

It is an object of the present invention to provide a method, device and system with which at least some of the above stated drawbacks of the known system are obviated or reduced.

It is also an object of the present invention to provide a method, device and system in which the quality of the cultivated crop is relatively uniform and/or entails little loss.

It is a further object of the present invention to provide a method, device and system in which harvesting of the cultivated crop can be realized in rapid and efficient manner.

According to the invention, at least one of these objectives is achieved in a method for growing a crop as claimed in claim 1. The method comprises of arranging a crop or a precursor thereof on a carrier and then further cultivating the crop, wherein the carrier comprises a displaceable conveyor arranged for the purpose of holding the crop or precursor thereof at a distance above a water supply, the carrier comprises a conveyor belt, and the method also comprises of harvesting the crop by severing the upper part of the crop by transporting the crop along a cutting installation using the conveyor belt.

The method further comprises of separating the severed parts of the crop from the substrate and the remaining part of the crop. The separation preferably takes place by means of a rotating brush element along which the crop is guided. After separation the severed parts can be discharged via a first discharge conveyor belt. The remaining part of the crop and the substrate can be processed as waste, although in determined embodiments a further separating step takes place. This separating steep can entail severing of the part of the crop below the substrate and discharging the severed part (for instance the roots) on a second discharge conveyor belt.

what then remains are the substrates or the web itself, usually with a small part (i.e. a middle part) of the crop still therein. In determined embodiments the substrate with the middle part therein can also be removed from the conveyor by pressing the substrate out of the conveyor. In these embodiments it is possible to collect and discharge, optionally clean and further treat the substrates with the middle part of the crop therein so that the substrates can be reused. In a determined embodiment the whose of the substrate and crop is crushed and the organic materials are separated from the substrate material. The substrate material can then be reused.

When the crop or the precursor thereof is arranged on or in a number of substrates, the harvesting can comprise of severing the part of the crop above the substrate by transporting the respective substrates with the crop along a cutting installation using the conveyor belt.

In determined embodiments the conveyor belt is embodied as a wire mesh belt. The precursor of the plant, for instance sowing material, can then be arranged in a web arranged on the wire mesh belt. The conveyor belt is adapted to hold the web with seeds at a distance above the water supply. The method can further comprise of severing the part of the grown crop above the web by transporting the web with crop along the cutting installation using the conveyor belt.

The method thus comprises of both growing and harvesting the crop on a conveyor belt. This means that cultivation and harvesting can be effected in efficient manner and with less effort, for instance in the form of manpower. The cultivation and harvesting process further requires relatively little space. This means that, if there is for instance little space in a glasshouse, this space can be used relatively efficiently and/or the yield per glasshouse can be increased.

In an embodiment in which the conveyor belt extends in both a cultivating section and a harvesting section, the method can comprise of cultivating the crop arranged on the conveyor belt in the cultivating section, displacing the crop arranged on the conveyor belt to the harvesting section and harvesting the crop arranged on the conveyor belt in the harvesting section. Following the cultivation process the crop need not therefore be removed from the conveyor belt and the crop can be transported directly to the harvesting section, where further processing of the crop takes place. In an embodiment in which the water supply is arranged in a water container extending only in the cultivating section and in which the cutting installation is situated only in the harvesting section, the method can comprise of removing an end wall of the water container following cultivation of the crop in the cultivating section, and displacing the crop including roots carried by the conveyor belt from the cultivating section to the harvesting section. Because the end wall is removed the crop, including the roots thereof hanging in the water container, can easily be transported further in the direction of the harvesting section.

In an embodiment of the invention the method further comprises of adjusting the distance between (the substrate or web in or on) the conveyor belt and the surface of the water supply, for instance for the purpose of achieving good growth conditions, depending on the type of crop and/or the growth stage of the crop. This adjustment of the distance can take place during the process of cultivation itself, or beforehand.

The substrate in which the crop, at least the precursor thereof, for instance one or more seeds, is arranged can be manufactured from organic material, in particular potting compost and/or coconut fibre. In other embodiments use is made of inorganic material, in particular rock wool or a foam, preferably polyurethane foam. The inorganic materials can be supplied free of pathogens, so greatly reducing the chance of diseases.

The substrate can comprise a holder with a substantially truncated pyramid shape. This shape is clampingly slidable into an opening of the conveyor belt so that the substrate remains in the desired (upright) position relative to the conveyor belt during growth and harvesting of the crop.

According to an embodiment of the invention, the method comprises of displacing the surface of the water supply in height direction for the purpose of adjusting the desired distance between the water surface and the conveyor belt. This can for instance be realized by arranging the water supply in a water container and by changing the water level by pumping water into the water container or pumping water out of the water container.

As alternative or in addition to changing the water level, the distance between the water surface and (the substrates or the web on or in) the conveyor belt can also be changed by displacing the conveyor belt itself in height direction. This allows simple adjustment of the desired distance between the water surface and the conveyor belt.

In a determined embodiment in which the water supply is arranged in an elongate water container, the method comprises of transporting the conveyor belt in longitudinal direction along the water container. The substrates arranged on the belt first are also discharged again first after they have been displaced over the whole cultivation length along the upper side of the water container. Displacement of the conveyor belt can take place in intermittent manner. When rows of openings are for instance arranged in each case in the conveyor belt (for instance rows perpendicularly of the longitudinal direction of the belt), during standstill a row of openings can be filled in manual or mechanical manner with substrates provided with a seed or plant, so that the conveyor belt allows simple filling. The rows of substrates with crops can be discharged in similar manner. In determined embodiments the substrates are guided in intermittent manner along one or more cutting installations for automatic harvesting of the cultivated crop. In other embodiments it is possible to have the belt run continuously.

In determined embodiments the method is performed in the outside air or inside a greenhouse or glasshouse into which the natural ambient light can penetrate. In other embodiments the crops receive light however from artificial light, preferably from LED lighting. The crops can receive light here from a combination of artificial light and ambient light, although in a preferred embodiment the crop receives light from only artificial lighting so as to be able to ensure optimal lighting for the relevant crop at the relevant growth stage of the crop.

When the plants have been grown to the point where they can be harvested, the conveyor belt is displaced in the direction of a so-called harvesting section. In order to prevent the roots of the plant being caught behind the rear wall of the water container, in determined embodiments in which the water container has a removable entry wall and/or end wall, the method comprises as already elucidated above of removing the end wall, removing the crops from the conveyor belt and replacing the end wall. This simplifies discharge and subsequent harvesting of the crop without the conveyor belt having to be displaced in height direction. In similar manner the entry wall can take a removable form, making possible a method in which the entry wall is removed, after which the substrates or the web are placed on the conveyor belt and the entry wall can be replaced. This may be necessary in embodiments in which the substrates protrude to some extent under the belt, while the entry wall extends against the underside of the belt.

The method can further comprise of measuring the intermediate space between the conveyor belt and the water surface of the water supply and automatically adjusting the intermediate space subject to the measured distance.

The desire to adjust the distance can depend on the length of the roots of the crop in the substrates. The length of the roots of the crop can be determined by an operator. Different distances may be necessary for different crops for optimal growth thereof. It may also be advantageous in some cases to adjust the distance during the cultivation process, for instance when the roots of the crop become longer. In other cases a distance, once set, can remain the same during the cultivation of a determined crop. In determined embodiments the method comprises of measuring the (average) length of the roots of the crop and automatically adjusting said distance subject to the outcome of the measurements.

It is possible to pump the water of the water supply around the water container using a circulation pump. Infeed preferably takes place at one outer end and discharge at another, opposite outer end of the water container. Additives such as fertilizers and/or oxygen can further be added to the water here in order to obtain the correct growth conditions. It is also possible, particularly for systems disposed in the open air (though not limited thereto), to heat or cool the water in the water container, once again for the purpose of regulating good growth conditions for the crop.

In a further embodiment the method comprises of providing two or more conveyor belts arranged one above the other and simultaneously cultivating crops on the two or more of these conveyor belts. This stacking of conveyor belts necessitates much less floor area for the same capacity, or a much greater capacity can be realized with the same floor area.

Provided as already described above is an option for harvesting the crop quickly and efficiently with relatively little labour in that, according to determined embodiments, the method comprises of severing the part of the crop above the substrate/web, wherein severing takes place by transporting the substrates or the web along a cutting installation, for instance a band-saw. The substrates can remain lying on the conveyor belt here and need not be removed from the conveyor belt when cultivation is completed and harvesting can commence. The same applies for a web arranged on the conveyor belt (wire mesh belt) .

According to another aspect of the invention, at least one of the above stated objects is achieved in a device for cultivating crops, as claimed in claim 9. The device comprises:
- a carrier to be disposed on a ground surface for carrying a number of substrates or a web in which a crop or a precursor thereof can be arranged;
- a water container for holding a water mass therein;
wherein the carrier is a displaceable conveyor arranged for the purpose of holding the substrates or the web a desired distance above a water supply in the water container; wherein the device comprises a cutting installation for severing the part of the crop above the substrate or the web, and the displaceable conveyor comprises a conveyor belt adapted to guide the crop along the cutting installation.

According to another aspect the conveyor belt extends in both a cultivating section for cultivating the crop and a harvesting section for harvesting the crop, the water container is arranged in the cultivating section and the cutting installation in the harvesting section.

In order to facilitate a displacement of the crop including the roots formed thereon following cultivation, the device is provided in a further embodiment with a removable end wall. The water container is embodied here, when the end wall is removed, to enable transport from the cultivating section to the harvesting section of the crop including roots carried by the conveyor belt without the transport of the crop being impeded by the presence of the end wall.

In an embodiment the device comprises means for adjusting the distance between the substrate in the conveyor belt and the surface of the water supply. The means can be formed by pump means for displacing the surface of the water supply in height direction and/or by displacing means for displacing the conveyor belt itself in height direction.

The device comprises a cutting installation for severing the part of the crop above the substrate or above the web. The cutting installation (for instance a band-saw) can be positioned here at a predetermined distance above a conveyor belt (for instance the conveyor belt used in the cultivation or a further conveyor belt) so that it engages on the crop directly above the substrates arranged in the openings of the conveyor belt or directly above the web.

Provided according to a third aspect of the invention is an assembly of a building comprising a conditioned space and a device as defined here placed therein. The conditioned space is conditioned here in the sense that at least the temperature inside the space can be adjusted. The space can be further embodied such that it can remain substantially pathogen-free. In a determined embodiment the building comprises a cultivation space for cultivating the crop and a processing space for harvesting the crop. Provided between the cultivation space and processing space is a closable opening. This opening remains closed as much as possible so as to protect the internal climate of the cultivation space from outside influences (insects, pathogens, temperature changes and the like). Following cultivation the opening is opened in order to allow passage of the crop so that it can be harvested in the processing space.

Further advantages, features and details of the invention will be elucidated on the basis of the following description of several embodiments thereof. Reference is made in the description to the accompanying figures, in which:
- Figure 1 is a schematic side view in longitudinal section of a glasshouse or the greenhouse in which a device according to an embodiment of the invention is arranged;
- Figure 2 is a cross-sectional view of the glasshouse or the greenhouse of figure 1; and
- Figures 3A and 3B show respectively a top view and a side view of an embodiment of a substrate provided with a precursor of a crop when arranged on a conveyor belt.

Figure 3B shows substrate 1 in the form of a truncated cone in which is arranged a seed (z) which will have to germinate to form a plant. The substrate can consist of different materials such as potting compost, coconut fibres, rock wool or preferably (polyurethane) foam. Foam is not organic and can be made and/or kept free of pathogens in relatively simple manner. Germination of the seeds can take place in the system to be described hereinbelow, or beforehand in another system or at another location.

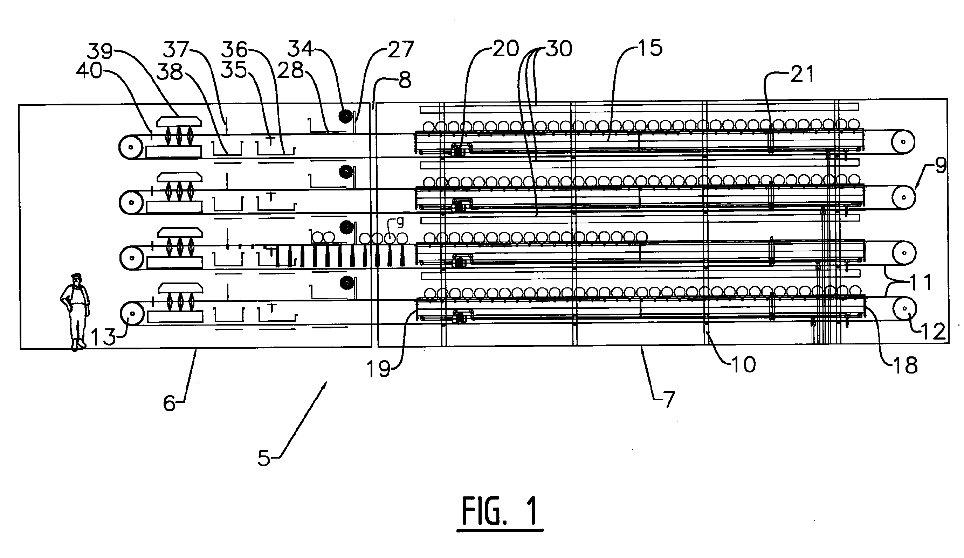

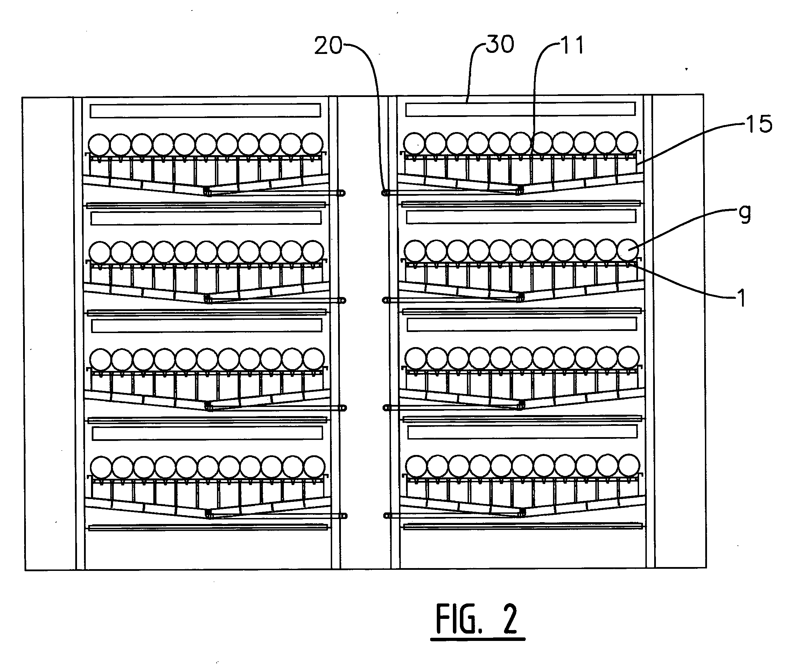

Figures 1 and 2 show a building 5, for instance a glasshouse or greenhouse, in which at least two spaces are provided: a cultivation space 7 in which the crop is cultivated and a processing space 6 in which the cultivated crop can be harvested. In other embodiments the crop is grown as well as harvested in the same space. In both situations there is however a cultivating section, in which the cultivation of the crop takes place, and a harvesting section in which the crop is harvested. In most situations the cultivating and harvesting sections are situated directly adjacent to each other so that the transport distance of the crop between the two sections is as short as possible.

A partition wall 8 is provided between cultivation space 7 and processing space 6. Arranged in this partition wall is a closable opening. In the closed situation both spaces are isolated from each other so that different conditions can be created in the cultivation space and the processing space.

An elongate conveyor 9 is arranged in both spaces. In the shown embodiment the conveyor is formed by a frame 10 on which extend a number of parallel conveyor belts 11 placed one above another. The endless conveyor belt is set into motion in intermittent manner by a drive (comprising one or more electric motors which can drive one or more rollers 12,13). It is optionally also possible to utilize an open belt (only on the upper side), wherein this must then be rolled up or unrolled.

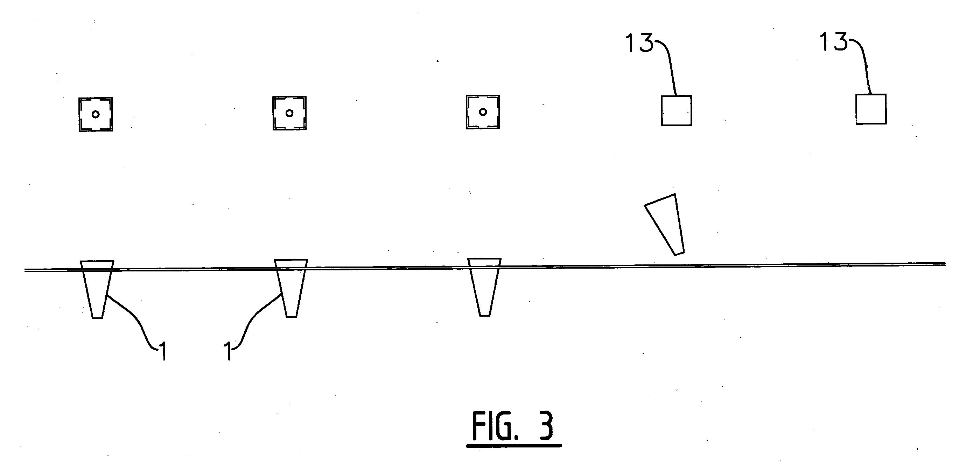

A conveyor belt 11 has holes or openings 14 (fig. 3A) arranged in a determined pattern. Openings 14 are arranged in a predetermined pattern and with predetermined dimensions so that substrate forms 1 can be placed in these openings 14 such that they all fit to essentially the same depth into belt 11. In the shown embodiment the substrates are formed such that they can be clamped in the openings in the conveyor belt. It is hereby possible to hold the substrates in a correct position relative to the conveyor belt during cultivation in the cultivation space, but also during harvesting in the processing space. The pattern of openings is further determined in accordance with the number of crops which can be grown per unit area. Substrate forms 1 are placed in conveyor belt 11 at the outer end of the belt, wherein the belt moves a short distance further at a time until all openings 14 have been filled. The conveyor belt is then stopped and the crop is now given time to grow. At a given moment here the lower outer ends of the roots of the crop will extend as far as or below the water surface so that a good water supply to the crop is possible. In the first section the substrate can also hang partially in the water. The substrate can have the property here of becoming saturated with water.

In a determined embodiment the conveyor belt has a width of up to 3 metres and a (cultivation) length of up to 200 metres. Under the upper part of the transport device a water container, more particularly an elongate water reservoir 15, is provided over the cultivation length of conveyor belt 11. Water reservoir 15 has a depth of between 200 mm and 400 mm and is provided on the end surfaces with removable walls 18, 19 in order to make it easier to fill and to harvest the crops.

Water reservoir 15 can be filled by means of pumps 17 with (rain)water from a basin or storage tank (not shown in the figures). The water level in reservoir 15 is measured using a level meter 21. Via a control system 25, which is coupled to level meter 21 and to pumps 17, the water in the reservoir can be brought to any desired level, for instance as a result of a determined measurement of the water level by level meter 21. In other embodiments the conveyor belt itself can be displaced in height direction. The support of the conveyor belt, for instance the above stated rollers, can be moved upward or downward, for instance with hydraulic actuators. These actuators are coupled to the control system so that adjustment of the height of the conveyor belt can be controlled via control system 25.

In order to be able to provide the water in the reservoir with oxygen and fertilizers, the water can if desired be pumped around using a circulation pump 20. The water is drawn in here at one outer end of the reservoir and pumped into the reservoir at the other outer end, causing a flow over the whole length of the reservoir. Fertilizers can be administered to the water, wherein the circulation ensures that these are distributed over the whole reservoir.

In order to add oxygen to the water, air can be drawn in during the circulation, for instance using a Venturi valve. It is optionally also possible to blow air into the reservoir under water. In the case of an indoor application, artificial (LED) lighting 30, which can be used for the purpose of growing the crops, is arranged over the whole length above the conveyor belt. In the described indoor application the cultivating section of the conveyor belt is situated in the conditioned cultivation space 7, wherein the climate in this space is preferably fully controllable. In the case of an outdoor application (and also in some indoor applications) it must be possible to control the temperature of the water in water reservoir 15. During circulation the water can be pumped for this purpose through a heat exchanger 31, wherein the water can be heated or cooled if necessary.

Depending on the desired capacity and on the available floor area, conveyors can be stacked on one another in order to thus enable cultivation of many more crops per unit area. In the shown embodiment four conveyor belts are positioned one above another so that about four times as much yield can be realized per unit area of floor surface. In other embodiments this number can of course vary, depending on among other factors the wishes of the user, the dimensions of the building and the type of crop to be grown.

As soon as the crops (designated in the figures with "g", but only shown schematically and without roots for the sake of clarity of the figures) are ready for harvesting, the water is pumped out of water reservoir 15 and wall 19 of the water reservoir is removed on the end outlet surface so that the plants (the roots of which are hanging in the water reservoir) can be transported out of the reservoir.

The crops enter processing space 6 via a closable opening in partition wall 8. During transport the crops are severed just above the substrate using a cutting installation 27. Cutting installation 27 could for instance consist of a band-saw over the width of conveyor belt 11. The crops are then collected on a transverse discharge belt 28. Using a rotating roller brush 34 the severed crops are swept onto the discharge belt and discharged. Substrate forms 1 with the roots are still in conveyor belt 11 and are further transported to cutting knives 35 which sever the roots just below the substrate. The loose roots fall onto a transverse discharge belt 36 lying under the upper part of conveyor belt 11 and are discharged. If the substrate consists of an organic material, this step could optionally be omitted. The substrate forms are still in conveyor belt 11 and are further transported to a set of press-out units 37 which press the substrates through the opening in the belt. The substrates are collected and discharged via a transverse discharge belt 38.

If use is made of a substrate consisting of the foam substrate it is recycled, wherein the organic roots are separated from the foam. The conveyor belt is now empty and, if necessary, can be automatically cleaned on both sides using a cleaning installation 39. If desired, the excess water can be removed from the belt using a squeegee 40.

The present invention is not limited to the embodiments described herein. The rights are defined by the following claims.

## Claims

1. Method for cultivating a crop, in particular a plant crop or seed crop, the method comprising of arranging a crop or a precursor thereof on a carrier and then further cultivating the crop;
wherein the carrier comprises a displaceable conveyor (9) arranged for the purpose of holding the crop or precursor thereof at a distance above a water supply (15),
**characterized in that** the carrier comprises a conveyor belt (11), and that the method also comprises of harvesting the crop by severing the upper part of the crop by transporting the crop along a cutting installation (27) using the conveyor belt (11); further being **characterized by**
- separating the severed parts of the crop from the remaining part of the crop and the substrate (1) or the web, and discharging the separated severed parts via a first discharge conveyor belt (28); and/or
- severing the part of the crop below the substrate (1) or the web and discharging the severed part on a second discharge conveyor belt (36); and/or
- pressing the substrate (1) with the remaining part of the crop therein out of the conveyor belt.

2. Method as claimed in claim 1, wherein the conveyor belt (11) comprises a number of openings (14) in which respective substrates (1) are arranged, wherein the substrates are adapted to receive therein the crop or precursor thereof, the method further comprising of severing the part of the crop above the substrate by transporting the respective substrates with the crop along the cutting installation (27) using the conveyor belt.

3. Method as claimed in claim 1, wherein the conveyor belt comprises a wire mesh belt on which a web is arranged, wherein the web is adapted to receive therein a precursor of the crop, in particular crop seeds, the method further comprising of severing the part of the grown crop above the web by transporting the web with crop along the cutting installation (27) using the conveyor belt.

4. Method as claimed in claim 1, 2 or 3, wherein the conveyor belt (11) extends in both a cultivating section (7) and a harvesting section (5), the method comprising of cultivating the crop arranged on the conveyor belt in the cultivating section, displacing the crop arranged on the conveyor belt to the harvesting section and harvesting the crop arranged on the conveyor belt in the harvesting section.

5. Method as claimed in claim 4, wherein the water supply is arranged in a water container extending only in the cultivating section and the cutting installation (27) is situated only in the harvesting section, the method comprising of removing an end wall of the water container following cultivation of the crop in the cultivating section, and displacing the crop including roots carried by the conveyor belt from the cultivating section to the harvesting section, and/or
- removing the end wall, removing the substrates or the web with the crop from the conveyor belt and replacing the end wall.

6. Method as claimed in any of the foregoing claims, wherein the method comprises of adjusting the distance between the conveyor belt (11) and the surface of the water supply by displacing the conveyor belt in height direction for the purpose of adjusting the desired distance between the water surface and the conveyor belt, preferably also comprising of measuring the intermediate space between the conveyor belt and the water surface of the water supply and automatically adjusting the intermediate space subject to the measured distance, wherein the adjustment preferably also depends on the length of the roots of the crop in the substrates.

7. Method as claimed in any of the foregoing claims, comprising of displacing the conveyor belt (11) continuously or intermittently for successively feeding the substrates or the web with the seeds for cultivation and/or for successively discharging the substrates or the web with the cultivated crop.

8. Method as claimed in any of the foregoing claims, comprising of providing two or more conveyor belts (11) arranged one above another and simultaneously cultivating and harvesting crops on the two or more conveyor belts.

9. Device for cultivating a crop, the device comprising:
- a carrier to be disposed on a ground surface for carrying a number of substrates (1) or a web in which a crop or a precursor thereof can be arranged;
- a water container (15) for holding a water mass therein;
wherein the carrier is a displaceable conveyor (9) arranged for the purpose of holding the substrates (1) or the web a desired distance above a water supply in the water container;
**characterized in that** the device comprises a cutting installation (27) for severing the part of the crop above the substrate or the web, and that the displaceable conveyor comprises a conveyor belt (11) adapted to guide the crop along the cutting installation;
further being **characterized by**:
- a separating installation for separating the severed parts of the crop from the substrate or the web and the remaining part of the crop, and a first discharge conveyor belt for discharging the separated severed parts; and/or
- a cutting installation (35) for severing the part of the crop below the substrate or the web and a second discharge conveyor belt for discharging the severed roots on a second discharge conveyor belt; and/or
- a press-out unit (37) for pressing the substrate with the remaining part of the crop therein out of the conveyor belt (11) .

10. Device as claimed in claim 9, wherein the conveyor belt extends in both a cultivating section (7) for cultivating the crop and a harvesting section (6) for harvesting the crop, and wherein the water container is arranged in the cultivating section and the cutting installation in the harvesting section.

11. Device as claimed in claim 10, wherein the water container comprises a removable end wall (8) and the water container is embodied, when the end wall is removed, to enable transport from the cultivating section (7) to the harvesting section (6) of the crop including roots carried by the conveyor belt.

12. Device as claimed in any of the claims 9-11, comprising displacing means for displacing the conveyor belt (11) in height direction for the purpose of adjusting the distance between the substrate in the conveyor belt and the surface of the water supply, the device preferably comprising a measuring unit (21) for determining the distance between the conveyor belt and the water surface of the water supply, and a control unit (25) coupled to the measuring unit and the displacing means for adjusting the intermediate space subject to the measured distance.

13. Device as claimed in any of the claims 9-12, comprising two or more conveyor belts arranged one above another.

## Patentansprüche

1. Verfahren zum Kultivieren einer erntbaren Kultur, insbesondere einer Pflanzenkultur oder Samenkultur, wobei das Verfahren Anordnen einer solchen Kultur oder eines Vorläufers davon auf einem Träger und dann weiter Kultivieren der Kultur aufweist,
wobei der Träger eine zum Zweck eines Haltens der Kultur oder des Vorläufers davon in einem Abstand oberhalb einer Wasserversorgung (15) angeordnete verschiebbare Fördereinrichtung (9) aufweist,
**dadurch gekennzeichnet, dass** der Träger ein Förderband (11) aufweist und dass das Verfahren auch Ernten der Kultur durch Abtrennen des oberen Teils der Kultur durch Transportieren der Kultur entlang einer das Förderband (11) benutzenden Schneideinrichtung (27) aufweist,
weiter **gekennzeichnet durch**
- Separieren der abgetrennten Teile der Kultur von dem verbleibenden Teil der Kultur und dem Substrat (1) oder dem Gewebe und Entladen der separierten abgetrennten Teile über ein erstes Entladeförderband (28) und/oder
- Abtrennen des Teils der Kultur unterhalb des Substrats (1) oder des Gewebes und Entladen des abgetrennten Teils auf ein zweites Entladeförderband (36) und/oder
- Drücken des Substrats (1) mit dem darin verbleibenden Teil der Kultur aus dem Förderband.

2. Verfahren nach Anspruch 1, wobei das Förderband (11) eine Anzahl Öffnungen (14) aufweist, in denen jeweilige Substrate (1) angeordnet sind, wobei die Substrate geeignet sind zum darin Aufnehmen der Kultur oder des Vorläufers davon, wobei das Verfahren weiter Abtrennen des Teils der Kultur oberhalb des Substrats durch Transportieren der jeweiligen Substrate mit der Kultur entlang der das Förderband benutzenden Schneideinrichtung (27) aufweist.

3. Verfahren nach Anspruch 1, wobei das Förderband einen Drahtgurt aufweist, auf dem ein Gewebe angeordnet ist, wobei das Gewebe geeignet ist zum darin Aufnehmen eines Vorläufers der Kultur, insbesondere von Kultursamen, wobei das Verfahren weiter aufweist Abtrennen des Teils der gewachsenen Kultur oberhalb des Gewebes durch Transportieren des Gewebes mit der Kultur entlang der das Förderband benutzenden Schneideinrichtung (27).

4. Verfahren nach Anspruch 1, 2 oder 3, wobei das Förderband (11) sich in sowohl einem Kultivierungsabschnitt (7) als auch Ernteabschnitt (5) erstreckt, wobei das Verfahren Kultivieren der auf dem Förderband im Kultivierungsabschnitt angeordneten Kultur, Verschieben der auf dem Förderband angeordneten Kultur zum Ernteabschnitt und Ernten der auf dem Förderband angeordneten Kultur im Ernteabschnitt aufweist.

5. Verfahren nach Anspruch 4, wobei die Wasserversorgung in einem sich nur im Kultivierungsabschnitt erstreckenden Wasserbehälter angeordnet ist und die Schneideinrichtung (27) sich nur im Ernteabschnitt befindet, wobei das Verfahren ein auf eine Kultivierung der Kultur im Kultivierungsabschnitt folgendes Entfernen einer Endwand des Wasserbehälters und ein Verschieben der vom Förderband getragenen, Wurzeln umfassenden Kultur vom Kultivierungsabschnitt zum Ernteabschnitt und/oder
- Entfernen der Endwand, Entfernen der Substrate oder des Gewebes mit der Kultur vom Förderband und wieder Anordnen der Endwand
aufweist.

6. Verfahren nach einem der vorhergehenden Ansprüche, wobei das Verfahren Einstellen des Abstands zwischen dem Förderband (11) und der Oberfläche der Wasserversorgung durch Verschieben des Förderbands in der Höhenrichtung zum Zweck einer Einstellung des gewünschten Abstandes zwischen der Wasseroberfläche und dem Förderband aufweist, vorzugsweise auch Messen des Zwischenraums zwischen dem Förderband und der Wasseroberfläche der Wasserversorgung und automatisches Einstellen des vom gemessenen Abstand abhängigen Zwischenraums aufweist, wobei das Einstellen vorzugsweise auch von der Länge der Wurzeln der Kultur in den Substraten abhängt.

7. Verfahren nach einem der vorhergehenden Ansprüche, aufweisend kontinuierliches oder intermittierendes Verschieben des Förderbands (11) zum sukzessiven Fördern der Substrate oder des Gewebes mit den Samen zur Kultivierung und/oder zum sukzessiven Entladen der Substrate oder des Gewebes mit der kultivierten Kultur.

8. Verfahren nach einem der vorhergehenden Ansprüche, aufweisend Bereitstellen von zwei oder mehr übereinander angeordneten Förderbändern (11) und ein gleichzeitiges Kultivieren und Ernten von Kulturen auf den zwei oder mehr Förderbändern.

9. Vorrichtung zum Kultivieren einer erntbaren Kultur, wobei die Vorrichtung aufweist:
- einen auf einer Bodenfläche anzuordnenden Träger zum Tragen einer Anzahl von Substraten (1) oder eines Gewebes, in denen bzw. dem eine solche Kultur oder ein Vorläufer davon angeordnet werden kann,
- einen Wasserbehälter (15) zum darin Halten einer Wassermasse, wobei der Träger eine verschiebbare Fördereinrichtung (9) ist, die zum Zweck eines Haltens der Substrate oder des Gewebes in einem gewünschten Abstand oberhalb einer Wasserversorgung im Wasserbehälter angeordnet ist,
**dadurch gekennzeichnet, dass** die Vorrichtung eine Schneideinrichtung (27) zum Abtrennen des Teils der Kultur oberhalb des Substrats oder des Gewebes aufweist und dass die verschiebbare Fördereinrichtung ein Förderband (11) aufweist, das geeignet ist zum Führen der Kultur entlang der Schneideinrichtung,
weiter **gekennzeichnet durch**
- eine Separierungseinrichtung zum Separieren der abgetrennten Teile der Kultur von dem Substrat oder dem Gewebe und dem verbleibenden Teil der Kultur und ein erstes Entladeförderband zum Entladen der separierten abgetrennten Teile und/oder
- eine Schneideinrichtung (35) zum Abtrennen des Teils der Kultur unterhalb des Substrats oder des Gewebes und ein zweites Entladeförderband zum Entladen der abgetrennten Wurzeln auf ein zweites Entladeförderband und/oder
- eine Ausdrückeinheit (37) zum Drücken des Substrats mit dem darin verbleibenden Teil der Kultur aus dem Förderband (11).

10. Vorrichtung nach Anspruch 9, wobei sich das Förderband in sowohl einem Kultivierungsabschnitt (7) zum Kultivieren der Kultur als auch einem Ernteabschnitt (6) zum Ernten der Kultur erstreckt, und wobei der Wasserbehälter im Kultivierungsabschnitt und die Schneideinrichtung im Ernteabschnitt angeordnet ist.

11. Vorrichtung nach Anspruch 10, wobei der Wasserbehälter eine entfernbare Endwand aufweist und der Wasserbehälter verkörpert ist, wenn die Endwand entfernt ist, um einen Transport vom Kultivierungsabschnitt (7) zum Ernteabschnitt (6) der vom Förderband getragenen, Wurzeln umfassenden Kultur zu ermöglichen.

12. Vorrichtung nach einem der Ansprüche 9 bis 11, aufweisend eine Verschiebeeinrichtung zum Verschieben des Förderbands (11) in der Höhenrichtung zum Zweck einer Einstellung des Abstandes zwischen dem Substrat im Förderband und der Oberfläche der Wasserversorgung, wobei die Vorrichtung vorzugsweise eine Messeinheit (21) zum Bestimmen des Abstands zwischen dem Förderband und der Wasseroberfläche der Wasserversorgung und eine an die Messeinheit und die Verschiebeeinrichtung gekoppelte Steuereinheit (25) zum Einstellen des vom gemessenen Abstand abhängigen Zwischenraums aufweist.

13. Vorrichtung nach einem der Ansprüche 9 bis 12, aufweisend zwei oder mehr übereinander angeordnete Förderbänder.

## Revendications

1. Procédé de culture d'une plante, en particulier, d'une plante fourragère ou d'une plante semencière, le procédé comprenant l'agencement d'une plante ou d'un précurseur de celle-ci sur un support puis la culture de la plante ;
dans lequel le support comprend un convoyeur pouvant être déplacé (9) agencé dans le but de maintenir la plante ou un précurseur de celle-ci à une certaine distance au-dessus d'une source d'eau (15),
**caractérisé en ce que** le support comprend un tapis de convoyeur (11), et **en ce que** le procédé comprend aussi la récolte de la plante par coupe de la partie supérieure de la plante en transportant la plante le long d'une installation de coupe (27) en utilisant le tapis de convoyeur (11) ; **caractérisé en outre par** :
la séparation des parties coupées de la plante de la partie restante de la plante et du substrat (1) ou du tapis, et le déchargement des parties coupées via un premier tapis de convoyeur de déchargement (28) ; et/ou
la séparation de la partie de la plante au-dessous du substrat (1) ou du tapis et le déchargement de la partie coupée sur un second tapis de convoyeur de déchargement (36) ; et/ou
le pressage du substrat (1) avec la partie restante de la plante présente hors du tapis de convoyeur.

2. Procédé selon la revendication 1, dans lequel le tapis de convoyeur (11) comprend un certain nombre d'ouvertures (14) dans lesquelles des substrats (1) respectifs sont agencés, dans lesquelles les substrats sont adaptés pour recevoir à l'intérieur la plante ou un précurseur de celle-ci, le procédé comprenant en outre la coupe de la partie de la plante au-dessus du substrat par transport des substrats respectifs avec la plante le long de l'installation de coupe (27) au moyen du tapis de convoyeur.

3. Procédé selon la revendication 1, dans lequel le tapis de convoyeur comprend un tapis en treillis métallique sur lequel une bande est agencée, dans lequel la bande est adaptée afin de recevoir à l'intérieur un précurseur de la plante, en particulier des graines de la plante, le procédé comprenant en outre la coupe de la partie de la plante cultivée au-dessus de la bande en transportant la bande avec la plante le long de l'installation de coupe (27) au moyen du tapis de convoyeur.

4. Procédé selon la revendication 1, 2 ou 3, dans lequel le tapis de convoyeur (11) s'étend à la fois sur une section de culture (7) et une section de récolte (5), le procédé comprenant la culture de la plante agencée sur le tapis de convoyeur dans la section de culture, le déplacement de la plante agencée sur le tapis de convoyeur vers la section de récolte et la récolte de la plante agencée sur le tapis de convoyeur dans la section de récolte.

5. Procédé selon la revendication 4, dans lequel la source d'eau est agencée dans un conteneur d'eau s'étendant uniquement dans la section de culture et l'installation de coupe (27) est située uniquement dans la section de récolte, le procédé comprenant le retrait d'une paroi d'extrémité du conteneur d'eau à la suite de la culture de la plante dans la section de culture, et le déplacement de la plante comportant des racines supportées par le tapis de convoyeur à partir de la section de culture vers la section de récolte, et/ou
le retrait de la paroi d'extrémité, le retrait des substrats ou de la bande avec la plante du tapis de convoyeur et la remise en place de la paroi d'extrémité.

6. Procédé selon l'une quelconque des revendications précédentes, dans lequel le procédé comprend l'ajustement de la distance entre le tapis de convoyeur (11) et la surface de la source d'eau en déplaçant le tapis de convoyeur dans la direction verticale dans le but d'assurer le réglage de la distance désirée entre la surface de l'eau et le tapis de convoyeur, comprenant aussi, de préférence, la mesure de l'espace intermédiaire entre le tapis de convoyeur et la surface de l'eau de la source d'eau et l'ajustement automatique de l'espace intermédiaire objet de la distance mesurée, dans lequel le réglage dépend aussi, de préférence, de la longueur des racines de la plante dans les substrats.

7. Procédé selon l'une quelconque des revendications précédentes, comprenant le déplacement du tapis de convoyeur (11) de manière continue ou intermittente afin d'alimenter successivement les substrats ou la bande avec les graines afin d'assurer la culture et/ou de décharger successivement les substrats ou la bande avec la plante cultivée.

8. Procédé selon l'une quelconque des revendications précédentes, comprenant l'installation d'un ou plusieurs tapis de convoyeur (11) agencés l'un au-dessus de l'autre et la culture ainsi que la récolte simultanées des plantes sur deux ou plusieurs tapis de convoyeur.

9. Dispositif de culture d'une plante, le dispositif comprenant :
un support destiné à être disposé sur une surface du sol afin de supporter un certain nombre de substrats (1) ou une bande sur laquelle une plante ou un précurseur de celle-ci peut être agencée ;
- un conteneur d'eau (15) destiné à contenir une masse d'eau à l'intérieur ; dans lequel le support est un convoyeur pouvant être déplacé (9) agencé dans le but de maintenir les substrats (1) ou la bande à une distance désirée au-dessus de la source d'eau dans le conteneur d'eau ;
**caractérisé en ce que** le dispositif comprend une installation de coupe (27) destinée à couper la partie de la plante au-dessus du substrat ou de la bande, et **en ce que** le convoyeur pouvant être déplacé comprend un tapis de convoyeur (11) adapté afin de guider la plante le long de l'installation de coupe ;
**caractérisé en outre par** :
- une installation de séparation destinée à séparer les parties coupées de la plante du substrat ou de la bande et la partie restante de la plante, et un premier tapis de convoyeur de déchargement destiné à décharger les parties coupées séparées ; et/ou
- une installation de coupe (35) destinée à couper la partie de la plante au-dessous du substrat ou de la bande et un second tapis de convoyeur de déchargement destiné à décharger les racines coupées sur un second tapis de convoyeur de déchargement ; et/ou
- une unité de pressage (37) destinée à presser le substrat avec la partie restante de la plante présente hors du tapis de convoyeur (11).

10. Dispositif selon la revendication 9, dans lequel le tapis de convoyeur s'étend à la fois dans une section de culture (7) destinée à cultiver la plante et une section de récolte (6) destinée à récolter la plante, et dans lequel le conteneur d'eau est agencé dans la section de culture et l'installation de coupe dans la section de récolte.

11. Dispositif selon la revendication 10, dans lequel le conteneur d'eau comprend une paroi d'extrémité amovible (8) et le conteneur d'eau est incorporé, lorsque la paroi d'extrémité est retirée, pour permettre le transport depuis la section de culture (7) vers la section de récolte (6) de la plante comportant des racines transportée par le tapis de convoyeur.

12. Dispositif selon l'une quelconque des revendications 9 à 11, comprenant un moyen de déplacement destiné à déplacer le tapis de convoyeur (11) dans la direction verticale dans le but d'assurer l'ajustement de la distance entre le substrat sur le tapis de convoyeur et la surface de la source d'eau, le dispositif comprenant, de préférence, une unité de mesure (21) destinée à déterminer la distance entre le tapis de convoyeur et la surface de la source d'eau, et une unité de commande (25) couplée à l'unité de mesure et aux moyens de déplacement afin d'ajuster l'espace intermédiaire en fonction de la distance mesurée.

13. Dispositif selon l'une quelconque des revendications 9 à 12, comprenant deux ou plus tapis de convoyeur agencés les uns au-dessus des autres.
